Europäisches Patentamt

European Patent Office

Office européen des brevets

(19)

(11) **EP 0 798 871 A1**

(12) **EUROPEAN PATENT APPLICATION**
published in accordance with Art. 158(3) EPC

(43) Date of publication:
01.10.1997 Bulletin 1997/40

(51) Int. Cl.6: **H04B 1/707**

(21) Application number: 96935340.8

(86) International application number:
PCT/JP96/02995

(22) Date of filing: 16.10.1996

(87) International publication number:
WO 97/15122 (24.04.1997 Gazette 1997/18)

(84) Designated Contracting States:
DE GB IT NL SE

(30) Priority: 18.10.1995 JP 294784/95

(71) Applicants:
• TOYO COMMUNICATION EQUIPMENT CO. LTD.
Kouza-gun, Kanagawa 253-01 (JP)
• Kuroyanagi, Noriyoshi
Higashiyamato-shi, Tokyo 207 (JP)
• Suehiro, Naoki
sukuba-shi, Ibaraki 305 (JP)

(72) Inventors:
• KUROYANAGI, Noriyoshi
Higashiyamato-shi, Tokyo 207 (JP)
• SUEHIRO, Naoki
Tsukuba-shi, Ibaraki 305 (JP)
• NAITOH, Toshikatsu,
Toyo Commun. Equip. Co., Ltd.
Kouza-gun, Kanagawa 253-01 (JP)

(74) Representative: Skone James, Robert Edmund
GILL JENNINGS & EVERY
Broadgate House
7 Eldon Street
London EC2M 7LH (GB)

(54) **METHOD AND DEVICE FOR SEPARATING AND PRESUMING NOISE CONTAINED IN SPREAD SPECTRUM SIGNAL**

(57)    When a spread spectrum signal and various kinds of noise arrive at a receiver in a mixed state, the SN ratio of the received and demodulated signal and the frequency band utilization efficiency of the SS system are improved by separating the noise and discriminatingly detecting the frequency components of the noise. Specifically, the received frame signal r(t) containing noise is subjected to reverse spectrum spreading by using the same spread code sequence m(t) of a desired station, DC components are removed from the reverse-spread output u(t), a respread product output is produced by again multiplying the output u(t) by the spread code sequence m(t), N analysis frequency components Wi which are i times the frame rate which is the DFT conversion analysis result of the product output, the noise waveform components contained in the received signal are presumably detected by solving simultaneous linear equations with N unknowns constituted by using the set of Wi and noise frequency components Xj which are obtained by performing DFT conversion analysis only on the noise. The unknowns are the set of Xj.

Fig. 1

EP 0 798 871 A1

**Description**

TECHNICAL FIELD

The present invention relates to a method and apparatus for spread spectrum communications which provide for enhanced SN ratio of received signals by estimating and detecting noise or similar jamming or interfering components mixed in spread spectrum signals during transmission.

BACKGROUND ART

In spread spectrum communications data to be transmitted is used to modulate a sequence of spreading codes so that data having a spectrum of a relatively narrow band is spread over a wide frequency band; this system has excellent features such as small sending power per unit frequency avoidance of serious interference with other communications and inherent robustness against environment noise.

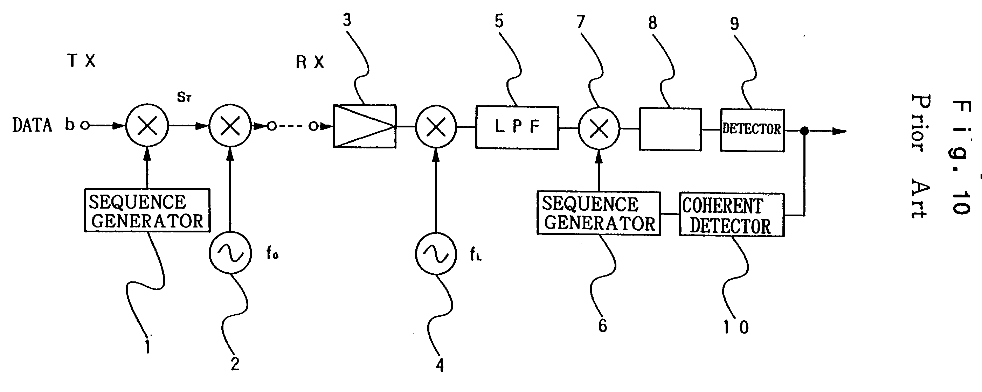

Fig. 10 illustrates in block form a typical configuration of a mobile communication system for spread spectrum communications over radio channels. A transmitter TX product-modulates a spreading code sequence from a sequence generator 1 by data b for transmission to obtain a base band transmission output $S_T$. The transmission output $S_T$ thus obtained is used to modulate a carrier of a frequency $f_0$ from an oscillator 2 to obtain a send signal, which is sent over a radio channel to a receiver RX. Incidentally, it is customary in the art to use, as the spreading code sequence, a pseudo noise code sequence (a PN code sequence) of the same bit period length as that of the data b. The following description will be given of on the assumption that spread spectrum communications utilize an M-sequence now most widely used among the PN sequences.

In the receiver RX the spread-spectrum modulated signal is fed via an antenna (not shown) to an amplifier 3, wherein it is amplified to a required level, the amplified signal is frequency-mixed with a local signal $f_L$ ($=f_0$) from a local oscillator 4 and the combined signal is extracted via a low-pass filter 5 to demodulate the spread signal of the base band (coherent demodulation being assumed).

The base band spread signal and an M-sequence code, which is identical with the code used in the transmitter TX and generated by a sequence generator 6, are input into a multiplier 7, wherein they are correlated with each other. The correlated output is integrated by an integrator 8 for a one-frame period, then the integrated output of one frame is fed via a detector 9 and a coherent detector 10 to a control terminal of the sequence generator 6 to control the timing for generation of the M-sequence to be synchronized with the phase of the received signal.

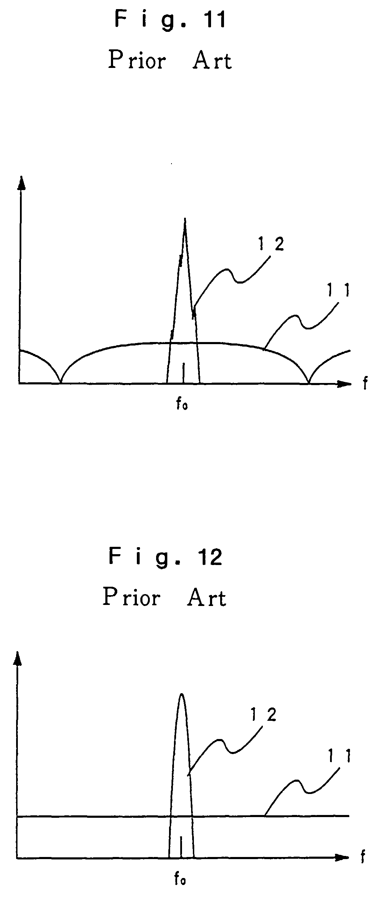

Fig. 11 is a schematic showing of the spectrum of a certain signal during transmission. Reference numeral 11 denotes the spectrum of a spread-spectrum modulated signal and 12 the spectrum of environmental noise mixed therein. When demodulated (despread) by the M-sequence code in the receiver, the spread-spectrum modulated signal 11, spread over a wide frequency band, becomes a narrow-band signal as shown in Fig. 12 and the environmental noise 12 a signal 14 spread over a wide frequency band. Hence, the spread spectrum communication system is now receiving attention as a communication system that essentially lessens the influence of environmental noise.

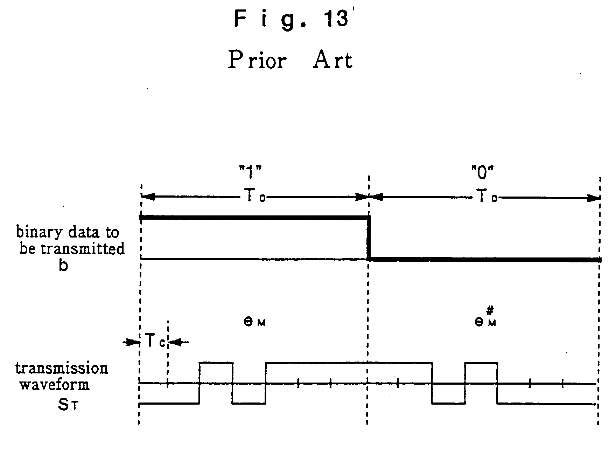

Fig. 13 is a waveform diagram showing the correspondence between a spreading code output $e_M$ and binary information in a conventional direct spreading spread spectrum communication system (DS-SS).

In Fig. 13, reference character b denotes binary data to be transmitted, $T_D$ the period of the data, $T_C$ its chip period and $S_T$ its transmission waveform. Fig. 13 shows an example of employing the M-sequence code that has a 7-chip code length L as one period. In this instance, the output $e_M$ is sent corresponding to a code "1" and its inverted version $(e_M)^\#$ is sent corresponding to a code "0." Hence, the occupied band-widths of the data signal and the spread transmission output $S_T$ are about $f_D = 1/T_D$ and about $f_c = 1/T_c$, respectively, as given by the following equation 1:

$$f_c = L f_D \hspace{4cm} \text{[Eq. 1]}$$

Since the spread-spectrum modulated signal thus occupies a very wide frequency band, it permits reduction of noise power contained in frequency bands below the frequency $f_c$ to $1/(2L)$ and hence is robust against noise accordingly. While in ordinary spread spectrum communication systems $L \gg 1$ and an L-fold bandwidth is used, the number of simultaneous telephone calls $N_3$ is $N_3 \gg L$ (approximately a fraction of the code length L) and the simultaneous transmission capacity/Hz is $(N_3/L)$ times that of a time division multiple access system (TDMA). Consequently, the conventional spread spectrum communication system has a defect that its frequency band utilization efficiency of the channel is extremely lower than that of the TDMA system.

The reason for which the number of simultaneous telephone calls Ns cannot be set so much large as compared with N is that it is impossible to make sufficiently small a cross correlation coefficient between an M-sequence $M_D$ assigned to a desired station and a different M-sequence $M_U$ assigned to another mobile station. In general, the spread spectrum communication (SS) system is also insufficient in suppressing dark noise, propagation noise by a delay wave due to multi-path reflection during propagation and a decrease in the SN ratio due to attenuation of the signal caused by fading-- these factors mainly contribute to inefficient utilization of frequency by the spread spectrum communication system. The noise suppressing effect in the traditional DS-SS system is given by a process gain $G_P$ (Eqs. 2 and 3).

$$G_P = 10 \log_{10} L \qquad [\text{Eq. 2}]$$

$$L = T_D/T_c = F_c/F_D$$

If the phase of each frequency component of incoming noise is completely random, the demodulated noise power (the output from the integrator 8 in Fig. 10) after demodulation at the receiving side is 1/(2L) with respect to the input noise power (the output from the LPF 5 in Fig. 10) as referred to previously. The cross correlation value $C_c$ between different M-sequences varies with their phases relative to each other and its mean value is given by the following equation 4.

$$[\text{Eq. 4}]$$

$$C_c = 1/\sqrt{L}$$

Hence, the demodulated output based on the cross correlation value $C_c$ becomes what is called inter-station interference noise. In the prior art, this gives rise to a problem that the SN ratio of the received demodulated signal is seriously degraded when the number of interfering stations is large.

The present invention has been made with a view to obviating the above-mentioned defects of the conventional spread spectrum communication system. According to the present invention, when the spread spectrum signal mixed with the above-mentioned various noises (such as dark noise, propagation noise by the delay waves and fading and inter-station interference noise) is received by the receiver, the signal and the noise are separated from each other and noise frequency components are discriminated and detected so that the SN ratio of the received demodulated signal is dramatically improved over the value conventionally defined by $G_P$ or $C_c$, thereby significantly increasing the frequency band utilization efficiency of the SS system.

DISCLOSURE OF THE INVENTION

To attain the above objective, the method of claim 1 for separating and detecting a noise component contained in a spread spectrum signal that is performed at a receiver of a spread spectrum communication system is characterized in that: a spreading code sequences are used for correspond to binary or multi-valued information,: a received frame signal r(t), composed of a spreading code sequence m(t) of a desired station and noise n(t), is multiplied by an analyzing code sequence g(t) to obtain the multiplied output u(t); a set of N complex frequency components $[U_i]$ (where i=0, 1, 2, ..., N-1) attained by discrete Fourier transform analysis of the multiplied output u(t), the received frame signal with n(t)=0 is multiplied by g(t) to obtain the multiplied output $\gamma(t)$, a set of N complex frequency components $[\Gamma_i]$ is obtained by discrete transfer analysis of $\gamma(t)$; the set of $[U_i]$ of the complex frequency components is divided into the in-phase component $[U_{Ii}]$ and the quadrature phase component $[U_{Qi}]$ to the set $[\Gamma_i]$; the received frame signal r(t) is further analyzed to obtain a set $[R_i]$ of complex frequency components; the amplitude of a component $R_k$ in the set of the complex frequency component $[R_i]$, which has an excessively large or small amplitude as compared with a preset correcting spectrum curve, is corrected within a range in which a value, obtained by selectively adding together the powers of the set $[U_i]$ and the component $[U_{Qi}]$ (where i=0,2,..., N-1) with respect to i, decreases or remains unchanged; and the amplitude of a component $R_k$, of a second excessively large or small amplitude is corrected within a range in which the power sum decreases or remains unchanged; these operations are repeated to reduce the power sum toward zero, then noise components $X_k$ and $X'_k$ are estimated from corrected values of the components $R_k$ and $R'_k$, and the estimated noise components are removed from the received frame signal r(t).

According to claim 2, the method of claim 1 for separating and detecting a noise component contained in a spread spectrum signal in a spread spectrum communication system, is characterized in that: of the frequency components of the received frame signal only the component projected to the phase of each frequency component $[C_i]$ obtained by a discrete Fourier transform analysis of the spreading code sequence m(t) of the desired station is extracted; and the time signal obtained by the inverse discrete Fourier transform analysis is used as the received frame signal r(t).

According to claim 3, the method of claim 1 for separating and detecting a noise component contained in a spread spectrum signal in a spread spectrum communication system, is characterized in that a square wave spreading code sequence m(t) of the desired station or a sequence $m_L(t)$ obtained by band limiting it is used as an analyzing code sequence g(t).

According to claim 4, the method of claim 1 for separating and detecting a noise component contained in a spread spectrum signal in a spread spectrum communication system, is characterized in that the analyzing code sequence g(t) is selected so that the multiplied output of the analyzing code sequence g(t) and the spreading code sequence m(t) of the desired station becomes a square wave that has a period kTc (where k=...,1/3,1/2,1,2,3,...).

According to claim 5, the method of claim 1 for separating and detecting a noise component contained in a spread spectrum signal in a spread spectrum communication system, is characterized in that the analyzing code sequence g(t) is selected so that the multiplied output of the analysis code sequence g(t) and a sequence $m_L(t)$ obtained by band limiting a square wave spreading code sequence m(t) of the desired station is composed of a sine wave of a period kTc and a limited number of its high-frequency waves.

According to claim 6, the method of claim 1 for separating and detecting a noise component contained in a spread spectrum signal, is characterized by the use of a received signal containing noise and a time wave form obtained by limiting a spreading code sequence for use at the receiving side to a passband frequency band lower than a predetermined upper limit frequency.

According to claim 7, the method of each of claims 1 through 5 for separating and detecting a noise component contained in a spread spectrum signal in a spread spectrum communication system, is characterized in that the multiplication of the received frame signal or multiplied output u(t) and the receiving side spreading code sequence m(t) in the time domain is performed by a convolution in the frequency domain.

According to claim 8, the method of each of claims 1 through 5 for separating and detecting a noise component contained in a spread spectrum signal in a spread spectrum communication system, is characterized in that: a transmitting signal is a time waveform obtained by the convolution of an impulse train produced by q-point sampling per chip time width of a square wave M-sequence and a sampling function waveform having its pass band limited to q/2; and the receiver uses, as the despreading signal the same waveform as the time waveform.

An apparatus of claim 9 for a receiver demodulating system in a spread spectrum communication system in which a spreading code sequence is made to correspond to binary or multi-valued information, is characterized by: means for despreading a received frame signal r(t) containing noise and the same spreading code sequence m(t) as that of a desired station; means for multiplying again the despread AC output, obtained by removing the DC component from the despread output u(t), with the spreading code sequence m(t) to obtain the re-spread output w(t); means for obtaining N respread frequency components Wi with i-times (where i=0,1,2,...,N-1) the frame rate that is the output obtained by a discrete Fourier transform analysis of the respread output w(t); means for solving simultaneous linear equation with N unknown variables consisting of a set of j-th (where j=0,1,2,...,N-1) noise frequency components Xj obtained by a discrete Fourier transform analysis of the received frame signal with the noise alone, and the coefficient matrix which relates the noise frequency components Xj and the respread frequency components Wi obtained in advance, and the set of $W_i$; and means for detecting the signal component in the frame obtained by removing the estimated noise wave form, inverse discrete fourier transform of the set $X_j$, from the received frame signal r(t).

According to the present invention described above in brief, the transmitter produces and sends a frame signal which is made of a spreading code whose polarity corresponds to the information to be sent, and the receiver first analyzes the received frame signal to estimate the noise-frequency components contained in the received frame signal, then removes the estimated noise from the original received signal, and performs ordinary desrpeading and demodulation processing--this enhances the SN ratio of the received and demodulated signal.

Based on the fact that the despread output is obtained by despreading (multiplying) the received frame signal with the spreading code corresponding to the desired station and the despread AC output is obtained by removing the DC component from the despread output, the despread AC output is composed of an AC noise component and a noise-dependent DC component resulting from the despreading process, it is possible to separate the AC noise component and the noise-dependent DC component.

Since the frequency component, obtained by a DFT analysis of the re-spread output is composed of the DC and AC components of the incoming noise and the noise-dependent DC component, the received noise component can be separated and estimated by solving simultaneous linear equation with N unknown variables, where N corresponds to the spreading code lengths.

As one of the received signal, let us consider the DC component of a pseudo noise and its single-frequency component with a known power whose phase matches that of a frequency component contained in the despreading code. By observing the re-spread output produced by the method stated above, the coefficients of the simultaneous equations are obtained, which can be used to solve the equations.

By only using noise components in-phase with the despreading code among all the frequency components of the received noise, the processing can be simplified.

The present invention is also effective against interference noise which is composed of spreading codes of the other stations.

BRIEF DESCRIPTION OF THE DRAWINGS

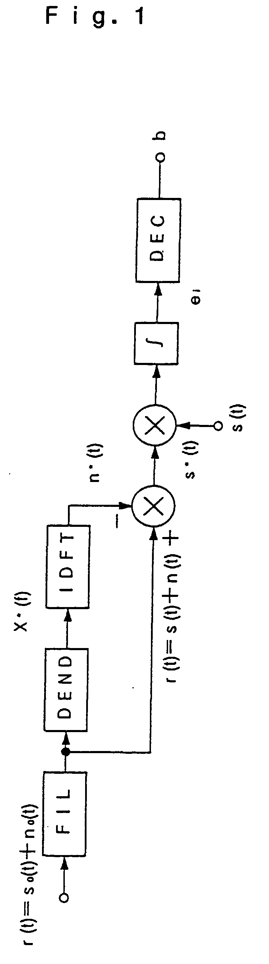

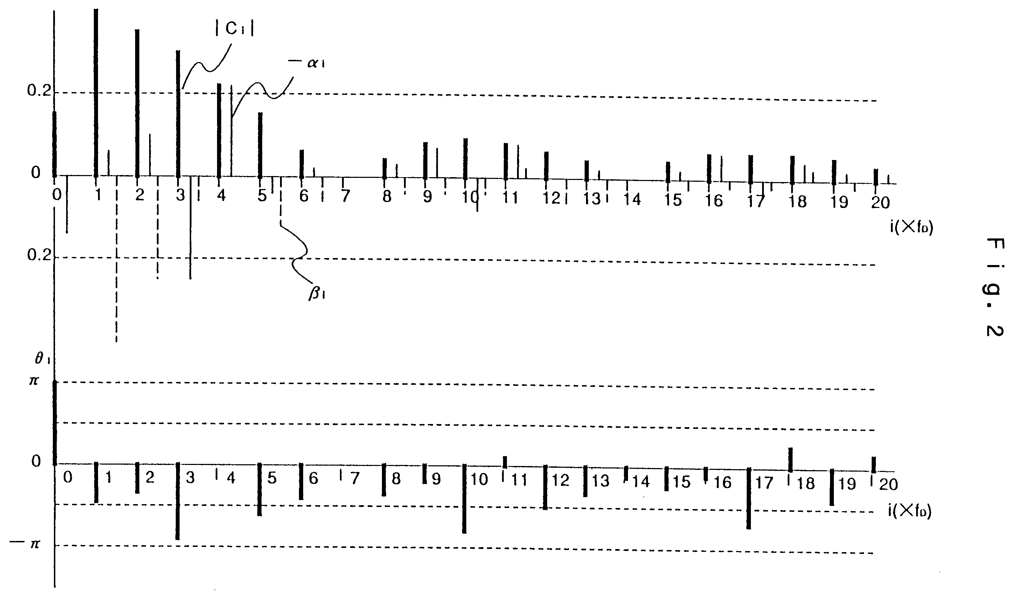

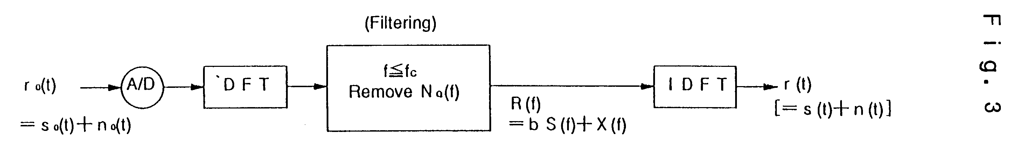

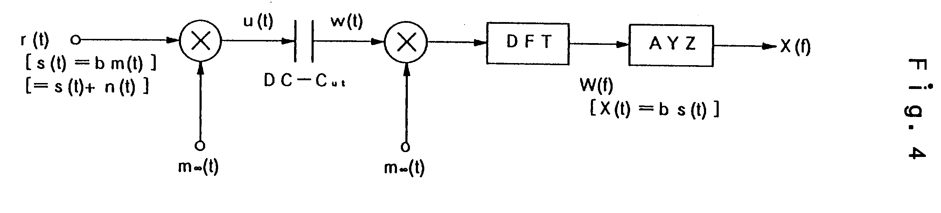

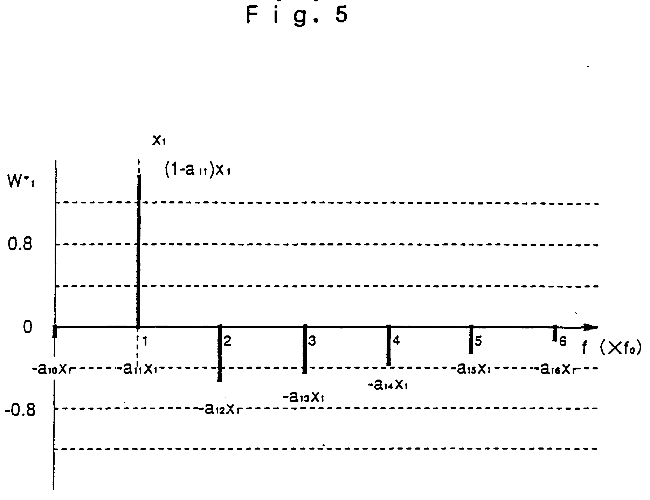

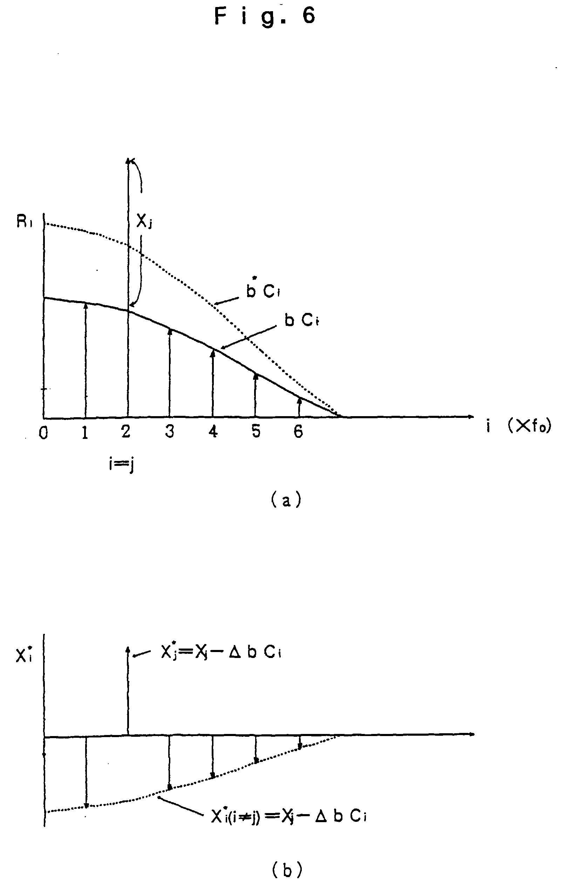

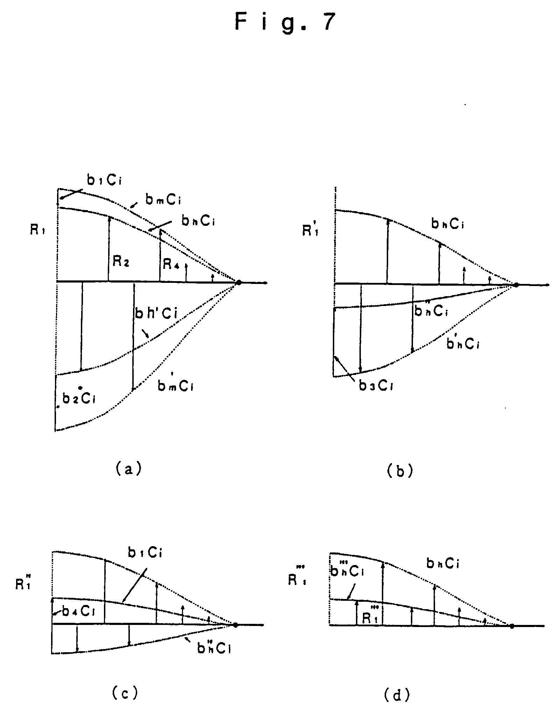

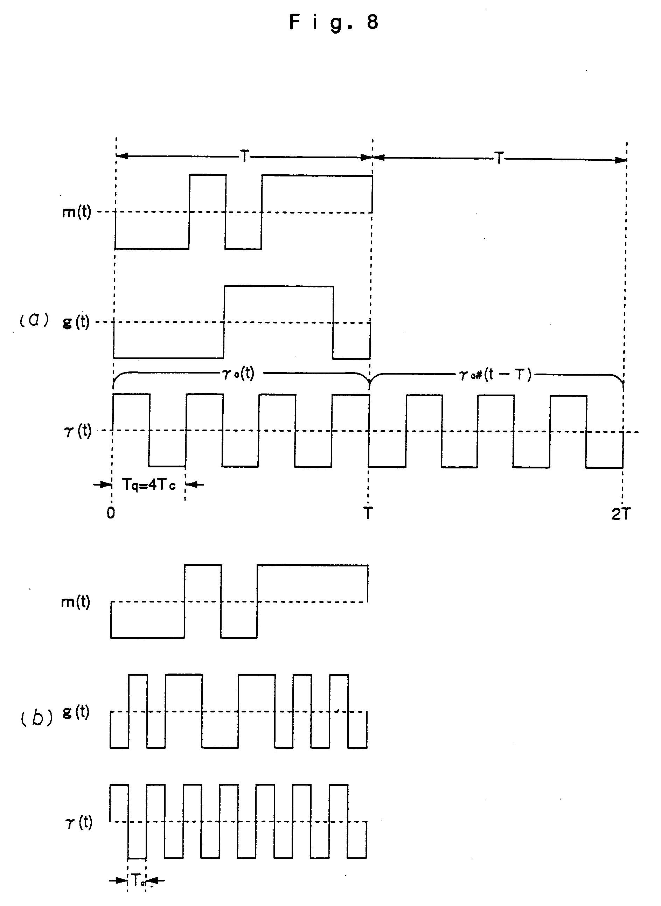

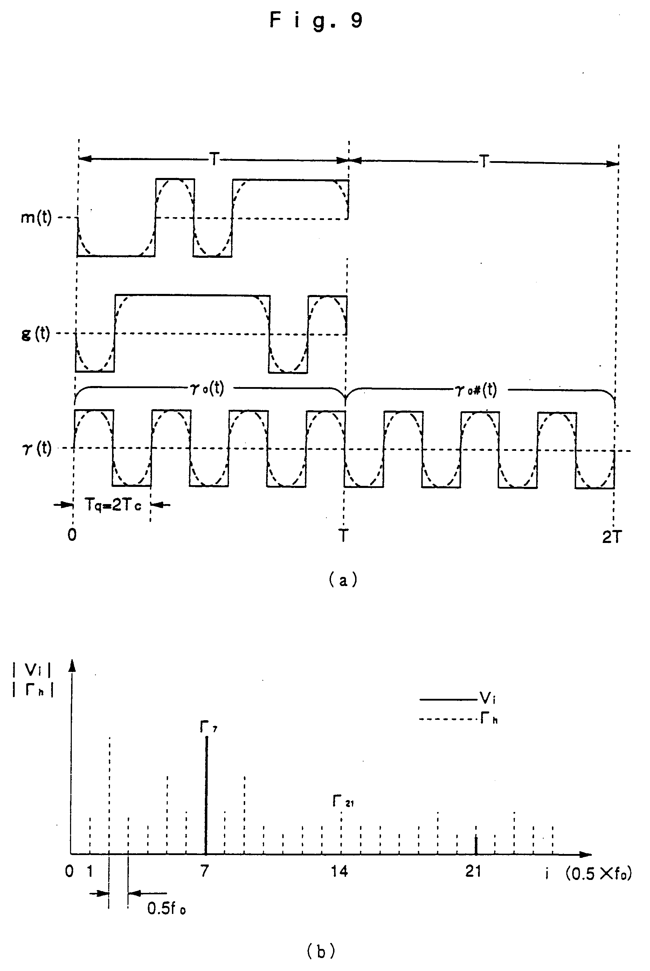

Fig. 1 is a block diagram of the demodulator to be used at a receiver in a spread spectrum signal communication system according to the present invention; Fig. 2 is a diagram of the single side spectra of an M-sequence; Fig. 3 is a block diagram illustrating an example of a pre-filter for use in the spread spectrum signal demodulating system according to the present invention; Fig. 4 is a block diagram of a noise discriminating and separating circuit for use in the spread spectrum signal demodulating system according to the present invention; Fig. 5 is a diagram showing an example spectrum of a respread output for a single frequency input; Figs. 6(a) and (b) diagrams showing spectra of a received frame signal and estimated noise; Figs. 7(a), (b), (c) and (d) are diagrams for explaining steps of correcting the estimated noise spectrum; Figs. 8(a) and (b) are diagrams showing multiplied-time waveforms; Figs. 9(a) and (b) are diagrams showing a multiplied-time waveform and its spectrum; Fig. 10 is a block diagram illustrating a general configuration of a spread spectrum communications system for mobile communication; Fig. 11 is a diagram schematically showing the spectrum of a signal during transmission; Fig. 12 is a diagram showing the despread spectrum of the signal and noise observed at a receiver of a spread spectrum communication system; and Fig. 13 is a diagram showing the correspondence between a spreading code and binary information in a conventional direct spreading type spread spectrum communication system.

BEST MODE FOR CARRYING OUT THE INVENTION

The present invention will hereinafter be described in detail based on its embodiments shown in the accompanying drawings.

Fig. 1 illustrates in block form a demodulator according to the present invention. In Fig. 1 a received input signal $r_0(t)$ into a pre-filter (FIL) is a time waveform of a frame period $T_D$ resulting from the addition of noise $n_0(t)$ to a transmitted signal $s_0(t)$ and it can be expressed by the following equation 5. The pre-filter FIL removes from the noise component $n_0(t)$ added during transmission a quadrature component $n_Q(t)$ orthogonal to the transmitted signal $s_0(t)$, leaving only a component $n_I(t)$ in-phase with the signal $s_0(t)$. That is, the input noise $n_0(t)$ is given by the following equation 5.

$$R_0(t) = s_0(t) + n_0(t) \qquad (0 \le t \le T_D) \qquad \text{[Eq. 5]}$$

$$n_0(t) = n_I(t) + n_Q(t) \qquad \text{[Eq. 6]}$$

As is evident from Eq. 6, the input noise $n_0(t)$ is composed of two components but only the component $n_I(t)$ is left. The orthogonality relation between the components $n_I$ and $n_Q$ means that phase angles of respective frequency components, obtained by a discrete Fourier transform (DFT) analysis of the components $n_I$ and $n_Q$, are orthogonal to each other.

Further, the pre-filter FIL has a function of removing a high-frequency component in the input signal $r_0(t)$ (usually, a frequency component above the chip rate $f_c$). Hence, the filter output can be expressed by the following equation 7.

$$r(t) = s_0(t) + n_I(t) \qquad \text{[Eq. 7]}$$
$$\equiv s(t) + n(t) \qquad (0 \le t \le TD)$$

where s(t) and n(t) are components that are obtained by band-limiting the signal $s_0(t)$ and the noise $n_0(t)$ and extracting from the noise component $n_0(t)$ the component $n_I(t)$ in-phase with the M-sequence (which will hereinafter be assumed to indicate the sequence of a desired station).

The filter output r(t) is applied to a despreading noise detector (DEND) to calculate therein an in-band noise spectrum estimated value $X(f)(<f_c)$. By inverting the estimated value X(f) in an inverse DFT circuit (IDFT), its time waveform $n^*(t)$ is obtained. The estimated noise time waveform is fed to a subtractor wherein it is subtracted from the filter output r(t) to obtain an output $s^*$ given by the following equations 8 and 9.

$$s^*(t) = r(t) - n^*(t) \qquad \text{[Eq. 8]}$$
$$= s(t) + \varepsilon(t)$$

$$\varepsilon(t) = n(t) - n^*(t) \qquad \text{[Eq. 9]}$$

where $\varepsilon(t)$ is the time waveform of a noise estimation error. If a substantially correct noise estimation can be made so that $\varepsilon(t) \ll n(t)$, the SN ratio of the output $s^*$ remarkably increases as compared with the SN ratio of the filter output r(t). The output $s^*$ is fed to a demodulator of an ordinary DS-SS system (corresponding to 7, 8 and 9 in Fig. 10), wherein received information b' corresponding to the transmitted one b is demodulated and detected. The demodulating circuit comprises a matched filter and a detector. Reference character s(t) denotes a reference signal that is applied to the matched filter and $e_i$ the output of the integrator which is a part of the matched filter.

Now, a description will be given for cases where as the spreading code sequence the M-sequence shown in Fig. 13 is used. In the first place, a time waveform $m_\infty(t)$ of a non-band-limited square wave M-sequence will be considered.

The M-sequence time waveform $m_\infty(t)$ can be expressed by the following equation 10, letting the number of samples per chip be represented by q.

Incidentally, $\underline{\infty}$ means a suffix $\infty$, but in this specification it is expressed in the form of $\underline{\infty}$ at some places due to limitations on the kinds of letters usable as suffixes (In the drawings it is represented as the suffix $\infty$).

$$m\infty(t) = \sum_{k=0}^{qL-1} c_{[k/q]} P_{TC}(T-kT_C) \qquad \text{[Eq. 10]}$$

where $T_C$ is a chip period, $[]$ a Gaussian symbol, q the number of samples/$T_C$, $c_{k}'$ a voltage amplitude at a k'-th sample point which is +1 or -1 V, and $P_{TC}(t-kT_C)$ an isolated squared pulse waveform whose voltage is 1 V from $t=kT_C$ to $(k+1)T_C$.

By a DFT analysis of the wave form $m_\infty(t)$, a both side frequency component $C'_i$ corresponding to an i-th frequency (if$_D$, $f_D=T_D^{-1}$) is given by the following equations 11 through 13.

$$C_i = \frac{1}{qL} \sum_{k=0}^{qL-1} c_{[k/q]} e^{-j\frac{2\Pi ik}{qL}} = \alpha_i + j\beta_i \qquad \text{[Eq. 11]}$$

$$C_i = 2\sqrt{\alpha_i^2 + \beta_i^2} > 0 \qquad (i \neq 0) \qquad \text{[Eq. 12]}$$

$$C_i = \sqrt{\alpha_i^2 + \beta_i^2} > 0 \qquad (i = 0) \qquad \text{[Eq. 13]}$$

$$\theta'_i = \tan^{-1}\frac{\beta_i}{\alpha_i} \qquad \text{[Eq. 13]}$$

where $\alpha_i$, $\beta_i$ are real and imaginary parts $C_i$ the amplitude value of the i-th one-side frequency component and $\theta_i$ its phase angle. Fig. 2 shows parts of $C_i$, $\alpha_i$ and $\beta_i$, calculated from the waveform $e_M$ of Fig. 13 with q set at 10. (The actual both side spectra exist to i=Lq-1=69 .)

On the other hand, a similar analysis of the noise n(t) gives an i-th both-side frequency component $X'_i$ by the following equations 14 through 17.

$$X'_i = \frac{1}{qL} \sum_{k=0}^{qL-1} n_{[k/q]} e^{-j\frac{2\Pi ik}{qL}} = \alpha_i + j\beta_i \qquad \text{[Eq. 14]}$$

$$\theta'_i = \tan^{-1}\frac{\dot{\beta_i}}{\dot{\alpha_i}} \pm \theta_i \qquad \text{[Eq. 15]}$$

$$X_i = (sign\ \theta'_i) 2\sqrt{\dot{\alpha_i} + \dot{\beta_i}} \qquad (i \neq 0) \qquad \text{[Eq. 16]}$$

$$X_i = (sign\ \theta'_i) \sqrt{\dot{\alpha_i} + \dot{\beta_i}} \qquad (i = 0)$$

$$X(f) = \sum_{i=0}^{qL-1} X_i \qquad \text{[Eq. 17]}$$

where $X_i$ is the amplitude of an i-th one-side frequency component, which takes a positive or negative value. (This is defined on the basis of the phase of the both-side frequency component $C'_i$.)

As indicated by Eq. 7, the noise component to be noted here is the component $n_I(t)$ that matches the phase angle $\theta_i$ and the noise component $n_Q(t)$ orthogonal thereto does not appear at the output of an ordinary demodulator, and hence it can be neglected. The frequency component $X'_i$ provided from the pre-filter FIL in Fig. 1 is in-phase with the frequency component $C'_i$. Therefore, letting the phase of the frequency component $X'_i$ be represented by $\theta'_i$, the following equation 18 holds true for Eqs. 13 and 17.

$$\theta'_i = \pm\theta_i \qquad \text{[Eq. 18]}$$

Fig. 3 is a block diagram illustrating an example of the pre-filter FIL described previously with respect to Fig. 1, which is shown to employ a DSP (Digital Signal Processing) circuit configuration. An input frame signal $r_0(t)$ is converted by an analog-to-digital converter A/D to digital form, thereafter being subjected to discrete Fourier transform processing by a DFT$\{f_c-N_Q(f)\}$.

As a result, the frequency components higher than the frequency $f_c$ are removed, the noise component $N_Q(t)$ whose phase is orthogonal to that of each frequency component of the M-sequence is also removed. This DFT output $R(if_D)=R_i$ is subjected to inverse discrete Fourier transform processing by an IDFT means to obtain the time waveform $r(t)$ given by Eq. 7. The output $R_i$ is composed of a signal component $S_i$ and a noise component $X_i$ as indicated by the following equation 19.

$$R_i = S_i + X_i \qquad \text{[Eq. 19]}$$

Fig. 4 illustrates in block form the noise discriminator/separator (DEND) that forms the principal part of the present invention. The binary information for each frame set at the sending side is a constant that is 1 or -1 ($0 \le t \le T_D$), but since the amplitude of the signal component at the receiving side has undergone variations during transmission, the signal component s(t) in the input r(t) can be expressed by the following equation using a real value b.

$$s_0(t) = bm\infty(t) \qquad (0 \le T \le TD) \qquad \text{[Eq. 20]}$$

The actual signal component s(t) is band limited in advance by a filter at the sending side and is further band limited by the filter (FIL) at the receiving side, but here the ideal waveform given by Eq. 20 is considered as the input and let it be assumed that only noise is band limited. In such an instance, the input r(t) is multiplied by $m\infty(t)$ to obtain an output u(t), the DC component included in this output u(t) is removed by a capacitor C, and the capacitor output is multiplied again by $m\infty(t)$ to obtain an output w(t). Since $m\infty(t) \times \underline{m\infty}(t) = 1$, the output u(t) is given by the following equation 21.

$$\begin{aligned} u(t) &= [bm\infty(t)+n(t)]m\infty(t) \qquad \text{[Eq. 21]} \\ &= b+n(t)m\infty(t) \\ &= b+u_D+u_H(t) \end{aligned}$$

where b is a DC component corresponding to the signal s(t) and $u_D$ and $u_H(t)$ are composed of a DC deviation $U_0$ and a high-frequency component, both are produced by the noise n(t) and are given by the following equations 22 through 25.

$$u_D = U_0 = R\left[\sum_{i=(L-1)}^{L-1}\right](C'_{-i}X'_i) \qquad \text{[Eq. 22]}$$

$$U(p) = \sum_{i=-(L-1)}^{L-1}(C'_{p-i}X'_i) \qquad \text{[Eq. 23]}$$

$$-i = qL-i \qquad \text{[Eq. 24]}$$

$$p-i = qL+p-i$$

[Eq. 25]

$$u_H(t) = F^\# \left[ \sum_{k=-(L-1)}^{L-1} U'_p \right]$$

where R is a real part and $F^\#$ an IDFT symbol.

After the removal of the DC component $(b+u_D)$ from the output u(t), the resultant component is fed to the next stage, where it is multiplied again by $m_\infty(t)$ to obtain a re-spread output w(t).

As will be seen from the Fig. 4 configuration, the output w(t) is obtained by multiplying n(t) with $m_\infty(t)$ twice and then subtracting $u_D m_\infty(t)$ from the multiplied output. This relationship can be given by the following equation 26 by removing the DC component from the signal component of Eq. 20 and then multiplying it by $m_\infty(t)$.

$$
\begin{aligned}
w(t) &= \{u(t)\text{-}b\text{-}u_D\}m_\infty(t) \\
&= \{n(t)m_\infty(t)\text{-}u_D\}m_\infty(t) \\
&= n(t)m_\infty(t)m_\infty(t)\text{-}u_D m_\infty(t) \\
&= n(t)\text{-}u_D m_\infty(t)
\end{aligned}
$$
[Eq. 26]

The term of the Dc component b generated by the signal component $bm_\infty(t)$ in the input frame signal is removed because it is not an object to be detected in this instance. Since the influence of the DC component b can thus be excluded with accuracy, noise can be detected by the method described below. The frequency component in Eq. 26 is expressed by the following equation 27 using a DFT symbol F.

$$
\begin{aligned}
W = F[w(t)] &= F[n(t)]\text{-}u_D F[m_\infty(t)] \\
&= \sum_{j=0}^{qL-1} [X'_j \text{-} u_D C'_j] \\
&= \left( \sum_{j=0}^{L-1} X'_j + \sum_{j=1 L-L+1}^{qL-1} X'_j \right) - \sum_{j=0}^{qL-1} \sum_{i=-(L-1)}^{L-1} C'_{-i} X'_i C'_j
\end{aligned}
$$
[Eq. 27]

Now, using the component $u_D$ given by Eq. 22 and taking into account that the components $X'_i$ and $C'_i$ are in-phase with each ether, W(f) can be expressed as the sum of the amplitudes $W_i$ of i-th frequency components. The calculation of the amplitude $W_i$ gives the following equations 28 and 29.

$$W = \sum_{i=0}^{L-1} W_i$$
[Eq. 28]

$$W_i = X_i - \left[ \sum_{j=0}^{L-1} a_{ij} X_j \right]$$

$$
\begin{aligned}
a_{ij} &= C_i C_j/2 &&(j \neq 0) \\
&= C_i C_j &&(j = 0)
\end{aligned}
$$
[Eq. 29]

where $a_{ij}$ is a DC-dependent deviation coefficient, which is a coefficient representing the ratio of the components $W_i$ to the noise component $X_j$. That is, it corresponds to the i-th frequency component of the M-sequence which is contained in the output w(t), as much as the noise-dependent DC component that the noise component $X_j$ generates.

The noise component $X_j$ contained in the input frame signal r(t) is band limited, to frequency regions less than $f_c$ and hence, it results in $j \leq (L-1)$. Hence, the application of Eq. 28 to L noise spectra $X_j$ (j= 0, 1, 2 ..., L-1), inclusive of the DC components, gives the following simultaneous linear equations with L unknown variables in $X_j$:

[Eq. 30]

$$
\begin{bmatrix}
(1-a_{00}) & -a_{01} & -a_{02} & \cdots\cdots & -a_{0,L-1} \\
-a_{10} & (1-a_{11}) & -1_{12} & \cdots\cdots & -a_{1,L-1} \\
-a_{20} & -a_{21} & (1-a_{22}) & \cdots\cdots & -1_{2,L-1} \\
\bullet & \bullet & \bullet & \bullet & \bullet \\
\bullet & \bullet & \bullet & \bullet & \bullet \\
-a_{L-1,0} & -a_{L-1,1} & -a_{L-1,2} & \cdots\cdots & (1-a_{L-1,L-1})
\end{bmatrix}
\begin{bmatrix}
X_0 \\ X_1 \\ X_2 \\ \bullet \\ \bullet \\ X_{L-1}
\end{bmatrix}
=
\begin{bmatrix}
W_0 \\ W_1 \\ W_2 \\ \bullet \\ \bullet \\ W_{L-1}
\end{bmatrix}
$$

Eq. 30 can be abbreviated as follows:

$$[A][X] = [W] \qquad \{Eq. 31\}$$

The above coefficient matrix can be pre-calculated by using the M-sequence spectrum (Eq. 11) used. The value $W_i$ can be obtained as by multiplying the input $r(t)$ by $m_\infty(t)$, removing its DC component, multiplying the remainder by $M_\infty$ (t) and subjecting the multiplied output to a DFT analysis. Accordingly, Eq. 31 can be solved, with the result that the value $X_j$ is obtained.

In this process, $\varepsilon$ in Eq. 8 can be set at zero theoretically. In the case where a pattern (magnitude and polarity) regarding j of the input noise $X_j$ closely resembles the pattern of the value $C_i$, however, $U_H(t)=0$ in Eq. 21, so that the component $w(t)$ becomes zero in Eq. 26 and hence cannot be detected.

Next, a description will be given of means for calculating each term of [A] in Eq. 31.

Now consider the case of applying a single frequency component (Eq. 32) as the input signal in Fig. 4.

$$n_j(t) = X_j \cos(2\pi i f_D t+\theta_j) \qquad (0 \le t \le T_D) \qquad [Eq. 32]$$

where $\theta_j$ indicates the phase of the j-th frequency component of the M-sequence. Letting $W^*_i$ represent the i-th frequency component of the value $W(f)$ that is obtained by simulation or measurement when $X_i=1$, Eq. 33 can be obtained.

$$
\begin{aligned}
W^*_i &= -a_{ij} \qquad (j \ne i) \\
&= 1-a_{ij} \qquad (j=i)
\end{aligned}
\qquad [Eq. 33]
$$

In Fig. 5 there is shown an example of the simulated output of $W^*_j$ when j=1.

The following method can also be used to determine the value $a_{ij}$. In practice, Eq. 20 cannot be assumed and the signal components are also band limited usually as shown in Eq. 7. The input signal in such an instance is expressed by Eq. 34.

$$s(t) = bm_L(t) \qquad (o \le f \le f_C) \qquad [Eq. 34]$$

$$r_L(t) = s_L(t)+n(t) \qquad [Eq. 35]$$

where $m_L(t)$ and $m_H(t)$ are waveforms composed solely of those of the frequency components of the waveform $m_\infty(t)$ which are below and above $f_c$, respectively.

The spectra of signals $r_L(t)$ and $s_L(t)$ match the value in Eq. 19 but are limited to $i \le (L-1)$. In this case, the influence of the signal dependent component b cannot completely be excluded from $w(t)$ by the means of the multiplication and DC cutoff. If the above-mentioned scheme is used, the ranks of the coefficient matrix of Eq. 30 drops from L to L-1. This means that one of the simultaneous linear equations with L unknown variables is expressed as a linear combination of the other (L-1) equations. Hence, no solution can be obtained unless any one of the values in a set of L unknown variables , $[X_j]$ (j = 0, 1, 2, ..., N-1), is given in advance. Alternatively, it can be solved simply by assuming the value b.

That is, one value $X_k$ in the set $[X_j]$ is assumed as $X^*_k$ or the value b as $b^*$ and then an estimated value $[X^*_j]$ of the set $[X_j]$ is calculated by the above-mentioned method. Next, it is necessary to evaluate the validity or appropriateness of the assumed value $X_k$ or $b^*$ on the basis of the set $[X^*_j]$.

Now, letting it be assumed, for simplicity, that k=L-1 is assumed, the following equation is reduced that the ranks of which is decreased by one.

[Eq. 36]

$$\begin{bmatrix} (1-a_{00}) & -a_{01} & -a_{02} & \cdots\cdots & -a_{0,L-2} \\ -a_{10} & (1-a_{11}) & -a_{12} & \cdots\cdots & -a_{1,L-2} \\ -a_{20} & -a_{21} & (1-a_{22}) & \cdots\cdots & -a_{2,L-2} \\ \bullet & \bullet & \bullet & \bullet & \bullet \\ \bullet & \bullet & \bullet & \bullet & \bullet \\ -a_{L-2,0} & -a_{L-2,1} & -a_{L-2,2} & \cdots\cdots & (1-a_{L-2,L-2}) \end{bmatrix} \begin{bmatrix} X^*_0 \\ X^*_1 \\ X^*_2 \\ \bullet \\ \bullet \\ X^*_{L-2} \end{bmatrix} = \begin{bmatrix} W_0 \\ W_1 \\ W_2 \\ \bullet \\ \bullet \\ W_{L-2} \end{bmatrix}$$

With the use of Eq. 36, a pre-assumed value $X^*_{L1}$ and the set $[X^*_j]$ (j = 0, 1, 2..., L-2) are determined.

$X_k$ is assumed as $X^*_k$, using a set $[R_i]$ of one side spectra of the received input rL(t) of Eq. (35) obtained by DFT processing. In such an instance, the following equation 37 holds for the k-th frequency component.

$$b^* = (R_k - X^*_k)/C_k \qquad\qquad [Eq. 37]$$

Thus, a set of solutions $[X^*_i]$ calculated by Eq. 37 assuming $X^*_k$ and a similar set of solutions $[X^*_i]$ calculated assuming $b^*$ that bear the relationship of Eq. 37 match each other.

The following equation shows the relationship between the solution $[X^*_i]$ of Eq. 36, obtained by assuming $b^*$ or $X^*_k$, and the received signal spectrum $[R_i]$ of Eq. 19. (In the following description, i<L unless otherwise indicated.)

$$R_i = bC_i + X_i \qquad\qquad [Eq. 38]$$

$$X^*_i = X_i \Delta bC_i \qquad\qquad [Eq. 39]$$

$$\Delta b = b^* - b \qquad\qquad [Eq. 40]$$

In Figs. 6(a) and (b) there are shown the set $[R_i]$, the correct value $[X_j]$ and the estimated value $[X^*_j]$ in the case where a noise component is present at the j-th frequency alone.

On the other hand, the product outputs by multiplying $r_L(t)$ by $m\underline{\infty}(t)$ and $m_L(t)$ by $m\underline{\infty}(t)$ are given as follows:

$$u_L(t) = \{m_L(t) + n(t)\} m\underline{\infty}(t) \qquad\qquad [Eq. 41]$$

$$\gamma(t) = m_L(t) \times m\infty(t) \qquad\qquad [Eq. 42]$$

Sets of one-side spectra obtained by DFT analyses of the product outputs $u_L(t)$ and $\gamma(t)$ are represented by $[U_p]$ and $[\Gamma_p]$, respectively. The value $[U_p]$ in this case differs by $[\Gamma_p]$ from the value of the one-side spectrum calculated by Eq. 23.

Here, letting the phase of $[\Gamma_p]$ be represented by $\psi_p$, $U_p$ is split into a component $U_{lp}$ in-phase with $\psi_p$ and a component $U_{Qp}$ orthogonal to $\psi_p$. That is, if $\psi_p$ is used as a reference phase, $U_p$ is given as follows:

$$U_p = U_{lp} + jU_{Qp} \qquad\qquad [Eq. 43]$$

The component $[U_{Qp}]$ has nothing to do with the signal component $bm_L(t)$ contained in the received signal r(t). Accordingly, even if $C_i$ varies in Fig. 6, the estimated noise spectrum $X^*_j$ changes from its true value $X_j$ by $\Delta bC_i$ but the set $[U_{Qp}]$ is free from the influence of $\Delta b$. Then, $b^*$ is set at 0 and $R_i$ in the following equation is regarded as a primary estimated value of noise.

$$X^*_j = R_j \qquad\qquad [Eq. 44]$$

Now, a description will be given on the assumption that the value $R_i$ shown in Fig. 7 is provided as an input. In Fig.

7, $b_m C_i$ is a curve proportional to an m-sequence spectrum passing through the maximum value $R_4$ among those $R_i < 0$ and $b_n C_i$ (where $b_n < b_m$) is a corrected (spectrum) curve that passes through the second largest value $R_2$. Now, let it be assume that spectra above $b_n C_i$ are all noise components,

$$R_4 > b_n C_4 \qquad \text{[Eq. 45]}$$

Then, assume that the power $P_Q$ (Eq. 46) of the quadrature component diminishes or remains unchanged as the result of $\Delta_1$ reduction of the amplitude $R_4$. In such a case, a slight reduction of $b_n$ and another $\Delta_2$ reduction of the amplitude $R_4$ are repeated, and the power $P_Q$ is evaluated each time--this processing is continued until the power $P_Q$ reached the minimum value or changes to increase.

In this process the total amount of reduction $\Delta R_4$ given by the following equation becomes an estimated value $X^*_4$.

$$P_Q = \sum_{p=1}^{2(L-1)} U_{Qp}^2 \qquad \text{[Eq. 46]}$$

$$X^*_4 = \Delta R_4 = \Delta_1 + \Delta_2 + ... \qquad \text{[Eq. 47]}$$

In general, when $b_h$ is further reduced, $R_2$ becomes an excessively large spectrum component, then the excessively large component of the value $R_2$ (the portion above the broken line $b_n$) is removed, and the value of the power $P_Q$ is evaluated. If the power $P_Q$ increases, $b_h + R_2$ is returned to the original value. That is, the same processing is performed immediately before the power $P_Q$ increases. (In this instance, when $b_n$ further decreases, it is assumed that the power $P_Q$ has increased and the value $R_2$ is not reduced.) Moreover, to cope with the case of $X_j < 0$, $b'_h$ (a negative value) in Fig. 7 is assumed and the same processing as mentioned above is carried out. Fig. 7(b) shows the results of the reduction of the amplitudes $R_1$ and $R_4$, using $b_h$ and $b'_h$ in Fig. 7(a). Figs. 7(b), (c) and (d) show an example in which it is assumed that the power $P_Q$ continues to decrease (or remain unchanged) as the curve of the negative side is further diminished from $b'_h$ to $b''_h$ and hence to $b'''_h$ as shown. In this example, in the process from Fig. 7(a) to (d), the value $R_i$ once becomes zero and then increases up to $R_1'''$ of the opposite polarity. This reveals that the noise estimated value of the first frequency, represented by $X^*_1 = R_1 - R'''_1$, is a negative large value. In Fig. 7, $b_1 C_i$, $b_2 C_i$, ... are fluctuations of the corrected curve. $R_1'$, $R_1''$, $R_1'''$ are values obtained by subtracting the estimated noise from or adding it to the first or initial value $R_1$, and if the estimation accuracy is high, only the signal component tends to be gradually left remaining. By changing the amplitude $b_h$ little by little and performing the above processing for $R_i$, $R'_i$, ... which are larger or smaller than $b_h C_i$, the estimated value $[X^*_i]$ is obtained.

A description will be given of enhancement of the correction accuracy, with the power of the in-phase component represented by $P_I$ of the following equation.

$$[Eq. \ 48]$$

$$P_I = \sum_{p=1}^{2(L-1)} U_{Ip}^2$$

Since a change in the noise component $X_i$ and an increase or decrease in the power $P_I$ bear a functional relation also regarding j, the estimation accuracy is increased by checking variations in the power $P_I$ while referring to the functional relation and by adjusting the amount of $\Delta R_j$ to be decreased or increased accordingly. A value including the DC component may also be used as $P_I$. By correcting the value $R_i$ while checking the value $P_I$, it is possible to perform the necessary processing without reducing the component $b^*$ of the received signal more than required.

Furthermore, a detailed estimation can be made by a method that takes into account a pattern concerning i in $U_{Ii}$ which is a component of $P_I$ given by Eq. 48. That is, if a pattern of the component $U_{Ii}$, which corresponds to the signal component $\gamma(t) = m_L(t) m_\infty(t)$ in Eq. 41, is set as a signal pattern, the component $U_{Ii}$ can be split into a component $[U_{IIi}]$ that correlates with this pattern and a component $[U_{IQi}]$ that intersects it orthogonally. Accordingly, letting that power component of the power $P_I$ corresponding to $[U_{IQi}]$ be represented by $P_{IQ}$, the sum $P'_Q$ of the powers $P_Q$ and $P_{IQ}$ is used as a measure for evaluation and the value $R_i$ can be adjusted by changing the wavy line of $b_h$ in the direction in which to decrease the evaluation measure. (In this instance, the correction can be made by using $b_h$ on the plus side and $b'_h$ on the minus side alternately with each other and using the value on the side made effective by a decrease in any one of $P_Q^*$.) Generally speaking, this method means that the sum of values obtained by selectively multiplying the components $U_{Ii}$ and $U_{Qi}$ by weighting coefficients is used as the evaluation measure.

The waveform by which the received input signal r(t) is multiplied is not limited specifically to the waveform $m_\infty(t)$ but may also be a different waveform g(t) and, also in this case, the same correction processing as described above can be performed as exemplified in Fig. 8. As shown in Fig. 8(a), the input waveform m(t) is multiplied by g(t) to obtain a square wave $\gamma_0(t)$ that has a $2T_c$ period and a 50% duty factor. Then, a waveform $\gamma^*_0(t-T)$ inverted from the waveform $\gamma_0(t)$ is added to the latter in the subsequent T sec to generate a waveform $\gamma(t)$ that is given by the following equation.

$$\gamma(t) = \gamma_0(t)\{H(t)-H(t-T)\}+\gamma^*_0(t-T)[H(t-T)-H(t-2T)] \qquad \text{[Eq. 49]}$$

where H(t) is a step function. $\gamma(t)$ includes a 7-cycle square wave that has a 2T period. Hence, by making a DFT analysis over the 2T period with the fundamental wave set at $f'_D=(2T)^{-1}=0.5f_D$ , the spectrum in the case of the input being m(t) becomes $\Gamma_h$ indicated by the solid line in Fig. 8(b). Here,

$$h = (2m-1)L \qquad (h=1, 2, ...) \qquad \text{[Eq. 50]}$$

By generating the waveform $\gamma(t)$ from that $\gamma_0(t)$, the spectrum $\Gamma_h$ can be simplified.

The output obtained by multiplying the received input r(t) by g(t) as is the case with Eq. (20) is defined by the following equation:

$$\begin{aligned} u(t) &= [bm(t)+n(t)]g(t) \\ &= b\gamma(t)+v(t) \end{aligned} \qquad \text{\{Eq. 51\}}$$

Let $U_i$ represent the i-th spectrum that is obtained by DFT analysis for the 2T-frame output u(t) and $V_i$ the i-th spectrum for the component v(t) corresponding to the noise. Since $\Gamma_h \ne 0$ for the frequency component i=h , it is possible to define components $V_{Ii}$ and $V_{Qi}$ that are in-phase with and orthogonal to the spectrum $\Gamma_h$,respectively, with respect to the noise component $V_i$. Therefore, the spectrum $U_i$ is given by the following equation:

$$[Eq. \quad 52]$$

$$\begin{aligned} U_i &= \Gamma_i - V_{Ii} + V_{Qi} \quad (i=h) \\ U_i &= V_i \qquad\qquad (i\ne h) \end{aligned}$$

In such an instance, $P_x$ can be defined by the following equation as the multiplied output power corresponding to the noise alone.

$$P_x = \sum_{i=0}^{\infty} V^2_i + \sum_{m=1}^{\infty} V^2_{Qh} \qquad \text{[Eq. 53]}$$

The range of integration of the above equation is, in practice, a period in which main spectra exist. In Figs. 6 and 7 the i-th spectrum of the input signal has been modified using the fact how the power, $P_Q$, of the components of the multiplied output u(t) which is orthogonal to n(t) decreases or is unnecessary as the measure for evaluation. But in this example the modification is made using the multiplied output power $P_x$ or $P_Q^*=P_x+P_{IQ}$ as mentioned previously instead of using the power $P_Q$.

In general, the cycle period of the waveform $\gamma(t)$ can be set at $T_q=kT_c$ (where k=...,1/3,1/2,1,2,3, ...). Fig. 8 shows the case where k=2. Figs. 9(a) and (b) show the cases where k=4 and k=1, respectively. For k=4, a 3.5-cycle square wave with period of 4-Tc can be made by adding the square wave $\gamma_0(t)$ so modified as making the time axis inverted to the second time frame (T-2T).

If a 4-period waveform $\gamma(t)$ is produced by further adding a polarity-inverted version of the waveform of the two periods, the square wave contains seven cycles. By a DFT analysis of the 4-period wave form, a simple spectrum similar to the previously-mentioned $\Gamma_h$ can be obtained. When k=1, the original period of the square wave $\gamma(t)$ contains an integral number of cycles, and hence the DFT analysis can be conducted with the original period of the square wave $\gamma(t)$. Also when k≤1, the analysis can similarly be carried out. In the case of a prime number such as k=3, the spectrum component of the square wave $\gamma(t)$ can similarly be simplified by adding after the original period a plurality of frames generated based on the original period as in the above.

Where the signal m(t) is band-limited, such a deformed waveform as indicated by the broken lines in Fig. 9(a) is resulted, but in this case, the waveform g(t) is also deformed as indicated by the broken lines. In such an instance, the waveform $\gamma(t)$ resembles a sine wave and high-order components of the value $\Gamma_h$ decrease and its spectrum becomes simpler, allowing more ease in the evaluation by the multiplied output power $P_x$.

Incidentally, letting $a^*_{ij}$ represent a component that is generated in the spectrum $U_i$ of Eq. 51 based on the noise component $X_j$ of unit power, the component $a^*_{ij}$ greatly varies depending on a combination of j and i. Hence, in the case of estimating the noise $X^*_j$ while changing $R_j$, only a plurality of relatively large values i' in the component $a^*_{ij}$ are selected and only those i'-th ones of the components of the power $P_X$ of Eq. 53 which correspond to the i-th components are selectively added to obtain $P'_Q$, which is used as an evaluation measure--this increases the accuracy of estimation of the value $X_j$.

Furthermore, the estimation accuracy could be increased, for example, by a method in which a plurality of kinds of waveforms g(t), such as mentioned above, are prepared and evaluation values Px based on them are combined to adopt, for example, the minimum (or maximum) noise estimated value $X^*_j$.

Although for the input signal and the signals taken in the process of noise detection, DFT and IDFT processing have been used, instead $r(t) \times m_\infty(t)$ can be implemented by a convolution of $R_i$ of Eq. 19 and $C'_i$ of Eq. 11. Thus, the entire arithmetic processing in Figs. 1, 3 and 4 can also be performed in the frequency domain. As a result, the matched filter output $e_l$ is obtained, which needs only to be compared with a preset threshold value.

As described above, according to the present invention, the noise and signal components contained in the received frame signal can be detected and estimated by a simple method which multiplies the spread spectrum signal by a spreading signal twice, analyzes the re-spread output and solves simultaneous linear equations with L unknown variables.

Further, with a method which repeats an operation in which after the received signal is multiplied by an analyzing wave form, an excessively large or small amplitude component in the received signal spectrum is decreased or increased in such a manner as to reduce the power of that one of the frequency components of the multiplied output which intersects orthogonally a signal corresponding frequency component except noise, the noise component contained in the received frame signal can be estimated from the corrected value.

By subtracting the noise component from the received frame signal, it is possible to obtain a received signal with no noise component or having the noise component reduced, so that information of the transmitted signal can be identified by subjecting the received signal to ordinary demodulation processing. Except when the frequency characteristics of noise (the magnitude and phase polarity of the frequency spectrum) are closely resemble the frequency characteristics of the spreading code, noise can be estimated with high accuracy. Thus, the present invention enhances the SN ratio of the received signal and hence dramatically improves the error rate in the spread spectrum communication.

## Claims

1. A method for separating and detecting a noise component contained in a spread spectrum signal that is performed at a receiver of a spread spectrum communication system is characterized in that:

   a spreading code sequences are used for corresponding to binary or multi-valued information,
   a received frame signal r(t), composed of a spreading code sequence m(t) of a desired station and noise n(t), is multiplied by an analyzing code sequence g(t) to obtain the multiplied output u(t);
   a set of N complex frequency components $[U_i]$ (where i=0, 1, 2, ..., N-1) obtained by discrete fourier transform analysis of the multiplied output u(t),
   the received frame signal with n(t)=0 is multiplied by g(t) to obtain the multiplied output $\gamma(t)$.
   a set of N complex frequency components $[\Gamma_i]$ is obtained by discrete transform analysis of $\gamma(t)$;
   the set $[U_i]$ of the complex frequency components is divided into the in-phase component $[U_{Ii}]$ and the quadrature phase component $[U_{Qi}]$ to the set $[\Gamma_i]$;
   the received frame signal r(t) is further analyzed to obtain a set $[R_i]$ of complex frequency components;
   the amplitude of a component $R_k$ in the set of the complex frequency component $[R_i]$, which has an excessively large or small amplitude as compared with a preset correcting spectrum curve, is corrected within a range in which a value, obtained by selectively adding together the powers of the set $[U_i]$ and the component $[U_{Qi}]$ (where i=0,2,..., N-1) with respect to i, decreases or remains unchanged;
   the amplitude of a component $R_k$, of a second excessively large or small amplitude is corrected within a range in which the power sum decreases or remains unchanged;
   these operations are repeated to reduce the power sum toward zero, then noise components $X_k$ and $X'_k$ are estimated from corrected values of the components $R_k$ and $R'_k$, and the estimated noise components are removed from the received frame signal r(t).

2. The method of claim 1 for separating and detecting a noise component contained in a spread spectrum signal in a spread spectrum communication system, characterized in that, of the frequency components of the received frame signal, only component projected to the phase of each frequency component $[C_i]$ obtained by a discrete Fourier transform analysis of the spreading code sequence m(t) of the desired station is extracted, and that the time signal obtained by the inverse discrete Fourier transform analysis is used as the received frame signal r(t).

3. The method of claim 1 for separating and detecting a noise component contained in a spread spectrum signal in a spread spectrum communication system, characterized in that a square wave spreading code sequence m(t) of the desired station or a sequence $m_L(t)$ obtained by band limiting it is used as an analyzing code sequence g(t).

4. The method of claim 1 for separating and detecting a noise component contained in a spread spectrum signal in a spread spectrum communication system, characterized in that the analyzing code sequence g(t) is selected so that the multiplied output of the analyzing code sequence g(t) and the spreading code sequence m(t) of the desired station becomes a square wave that has a period kTc (where k=...,1/3,1/2,1,2,3,...).

5. The method of claim 1 for separating and detecting a noise component contained in a spread spectrum signal in a spread spectrum communication system, characterized in that the analyzing code sequence g(t) is selected so that the multiplied output of the analysis code sequence g(t) and a sequence $m_L(t)$ obtained by band limiting the square wave spreading code sequence m(t) of the desired station is composed of a sine wave of a period kTc and a limited number of its high-frequency waves.

6. The method of claim 1 for separating and detecting a noise component contained in a spread spectrum signal, characterized by the use of a received signal containing noise and a time waveform obtained by limiting a spreading code sequence for use at the receiving side to a passband frequency band lower than a predetermined upper limit frequency.

7. The method to claims 1 through 5 for separating and detecting a noise component contained in a spread spectrum signal, characterized in that the multiplication of the received frame signal r(t) or multiplied output u(t) and the receiving side spreading code sequence g(t) in the time domain is performed by a convolution in the frequency domain.

8. The method of claims 1 through 5 for separating and detecting a noise component contained in a spread spectrum signal, characterized in that a transmitted signal is a time waveform obtained by the convolution of an impulse train produced by q-point sampling per chip time width of a square wave M-sequence and a sampling function waveform having its pass band limited to q/2, and that the receiver uses, as the despreading signal, the same waveform as the time waveform.

9. An apparatus for separating and estimating a noise component contained in a spread spectrum signal in a receiver demodulating system in a spread spectrum communication system in which a spreading code sequence is made to correspond to binary or multi-valued information,

   CHARACTERIZED BY:

   means for despreading a received frame signal r(t) containing noise and the same spreading code sequence m(t) as that of a desired station;
   means for multiplying again the despread AC output, obtained by removing the DC component from the despread output u(t), with the spreading code sequence m(t) to obtain the re-spread output w(t);
   means for obtaining N respread frequency components Wi with i-times (where i=0,1,2,...,N-1) the frame rate that is the output obtained by a discrete Fourier transform analysis of the respread output w(t);
   means for solving simultaneous linear equation with N unknown variables consisting of a set of j-th (where j=0,1,2,..., N-1) noise frequency components Xj obtained by a discrete Fourier transform analysis of the received frame signal with the noise alone, and the coefficient matrix which relates the noise frequency components Xj and the respread frequency components Wi obtained in advance, and the set of $W_j$; and
   means for detecting the signal component in the frame obtained by removing the estimated noise wave form, inverse discrete fourier transform of the set $X_j$, from the received frame signal r(t).

Fig. 1

$r(t) = s_o(t) + n_o(t)$

$X^{\cdot}(f)$

FIL

DEND

IDFT

$n^{\cdot}(t)$

$r(t) = s(t) + n(t)$

$s^{\cdot}(t)$

$s(t)$

∫

$\theta_i$

DEC

b

# Fig. 2

# F i g. 3

$r_o(t)$

$= s_o(t) + n_o(t)$

A/D

`D F T`

(Filtering)

$f \leqq f_c$
Remove $N_o(f)$

$R(f)$
$= b S(f) + X(f)$

I D F T

$r(t)$
$[= s(t) + n(t)]$

EP 0 798 871 A1

F i g. 4

18

Fig. 5

# Fig. 6

(a)

(b)

# F i g. 7

(a)

(b)

(c)

(d)

# F i g . 8

# Fig. 9

(a)

(b)

EP 0 798 871 A1

F i g. 10

Prior Art

24

# Fig. 11
## Prior Art

# Fig. 12
## Prior Art

F i g. 13

Prior Art

"1"
T$_D$

"0"
T$_D$

binary data to
be transmitted
b

Θ$_M$

Θ$_M^\#$

T$_c$

transmission
waveform
S$_T$

## INTERNATIONAL SEARCH REPORT

| | International application No. |
|---|---|
| | PCT/JP96/02995 |

**A. CLASSIFICATION OF SUBJECT MATTER**

Int. Cl$^6$  H04B1/707

According to International Patent Classification (IPC) or to both national classification and IPC

**B. FIELDS SEARCHED**

Minimum documentation searched (classification system followed by classification symbols)

Int. Cl$^6$  H04B1/707, H04J13/04

Documentation searched other than minimum documentation to the extent that such documents are included in the fields searched

| | |
|---|---|
| Jitsuyo Shinan Koho | 1926 – 1996 |
| Kokai Jitsuyo Shinan Koho | 1971 – 1996 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 5-75573, A (The Nippon Signal Co., Ltd.), March 26, 1993 (26. 03. 93)(Family: none) | 1 – 9 |
| T | Technical Research Report of IEICE, SST95-83, October 20, 1995 (20. 10. 95), Inst. of the Electronics, Information, and Communication Engineers (IEICE), Isayoshi Azeyanagi and others: "Approach to Received Noise Estimation in Spectrum Scattering Communication", PP. 13-18 | 1 – 9 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| January 13, 1997 (13. 01. 97) | January 28, 1997 (28. 01. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)